# EUROPÄISCHE PATENTSCHRIFT

(11) **EP 0 391 313 B1**
(45) Veröffentlichungstag und Bekanntmachung des Hinweises auf die Patenterteilung: **28.09.1994**
(21) Anmeldenummer: 90106300.8
(22) Anmeldetag: 02.04.1990
(51) Int. Cl.: H02B 13/02, H01H 31/16

(54) **Mehrfeldriger Mittelspannungs-Drehschalter**
Rotary medium high voltage multi-section switch
Disjoncteur rotatif moyenne tension à sections multiples

(30) Priorität: 03.04.1989 DE 3910753
(43) Veröffentlichungstag der Anmeldung: 10.10.1990
(73) Patentinhaber: Gec Alsthom T & D GmbH, 70772 Filderstadt (DE)
(72) Erfinder: Perle, Josef, D-7440 Nürtingen 10 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 224 051
- DE-B- 2 101 402
- DE-B- 2 546 490
- GB-A- 2 193 843

## Beschreibung

Die Erfindung betrifft einen mehrfeldriger Mittelspannungs-Drehschalter in SF6-Ausführung, bei dem die den einzelnen Feldern zugeordneten, drehbaren Schaltmesser und die zugehörigen Festkontakte in einem dichten Gehäuse gelagert bzw. gehaltert sind.

Derartige Drehschalter sind bekannt (siehe GB-A-2 193 843 und DE-B-2 546 490) und werden in der Praxis mit Erfolg verwendet.

Aufgabe der Erfindung ist es, einen solchen Drehschalter unter Realisierung möglichst geringer Abmessungen und unter Gewährleistung einer besonders hohen Sicherheit hinsichtlich der geforderten Gasdichtheit so auszubilden, daß möglichst wenig Einzelteile benötigt werden und die Realisierung eines Baukastensystems hinsichtlich der jeweils erforderlichen Kabel- und Trafoschalter ermöglicht wird.

Gelöst wird diese Aufgabe nach der Erfindung im wesentlichen dadurch, daß das Gehäuse als zweiteiliges Kunststoffgehäuse, insbesondere Gießharzgehäuse ausgebildet und im Mittelbereich mit einer schalenartigen, aus zwei symmetrischen Hälften bestehenden Kunststoffhalterung für Sammelschienenfunktion besitzende Mittelkontakte versehen ist.

Durch die Verwendung eines zweiteiligen Gießharzgehäuses entfällt im Vergleich zu herkömmlichen Ausführungsformen der Vorgang des Dichtschweißens, und es ist nur noch eine in der Verbindungsebene gelegene Dichtfläche vorhanden, die problemfrei dauerhaft abgedichtet werden kann.
Aufgrund der erfindungsgemäß vorgesehenen Anordnung von Sammelschienenfunktion besitzenden Kontakten im Mittelbereich des Gehäuses ergibt sich eine wesentliche konstruktive Vereinfachung.

Werden die beiden Gehäusehälften, wie dies gemäß der bevorzugten Ausgestaltung der Erfindung der Fall ist, symmetrisch ausgebildet, so wird zur Herstellung nur noch eine einzige Gießform benötigt, was ebenfalls zu einer Kostenersparnis führt.

Im Bereich der Verbindungsebene der beiden Gehäusehälften sind in der Gehausewandung bevorzugt Erderkontakte befestigt und mit einer aus dem Gehäuse geführten Anschlußschiene verbunden.

Wenn es erforderlich ist, können ohne Abweichung von der Grundkonzeption des Drehschalters nach der Erfindung die Gießformen auch so ausgelegt werden, daß durch entsprechende Anformungen von Köchern und Steckverbindungen eine überflutbare Anlage zur Verfügung steht.

Weitere besonders vorteilhafte Ausgestaltungen der Erfindung sind in den Unteransprüchen angegeben.

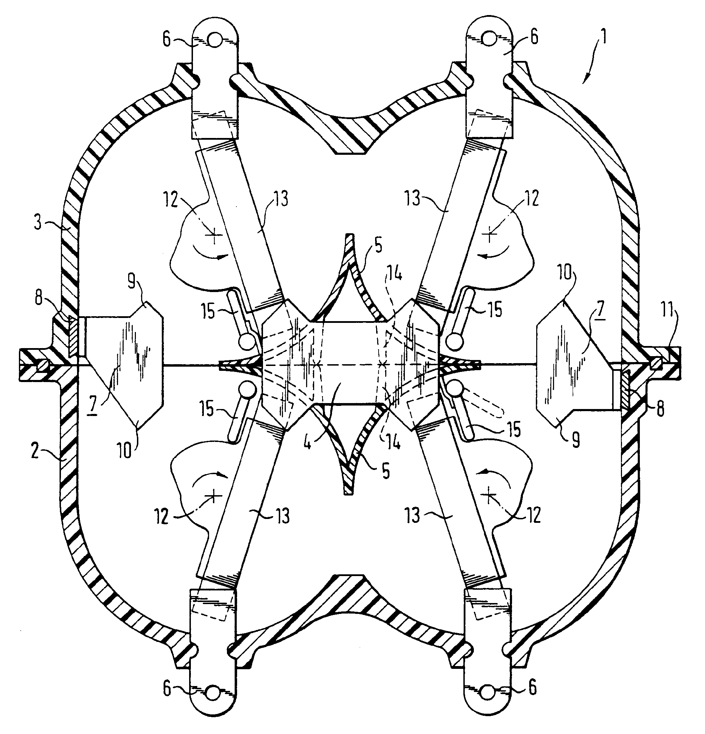

Die Erfindung wird nachfolgend beispielsweise anhand eines in der Zeichnung dargestellten vierfeldrigen SF6-Drehschalters näher erläutert.

Die Zeichnung zeigt einen Querschnitt durch einen gemäß der Erfindung ausgebildeten Drehschalter mit einem Gehäuse 1, das aus zwei symmetrischen Gehäusehälften 2, 3 aus Gießharz besteht. Die beiden Gehäusehälften sind in einer Verbindungsebene 11, gegebenenfalls unter Zwischenlage eines umlaufenden, elastischen Dichtorgans, dicht miteinander verbunden, wozu die Gehäusehälften mit einem entsprechenden, die dauerhaft dichte gegenseitige Verbindung sicherstellenden Flansch ausgestattet sind.

In dem Gehäuse sind vier etwa zylindrische, sich in Gehäuselängsrichtung erstreckende und miteinander in Verbindung stehende Kammern zur Aufnahme von Drehschaltern ausgebildet, wobei jeder Drehschalter pro Pol ein um eine Achse 12 drehbares Schaltmesser 13, das bezüglich der zugehörigen Drehachse exzentrisch versetzt ist, und zugehörige Kontakte 4, 6, 7 umfaßt.

Mittels dieser Drehschalter läßt sich nach Art eines Baukastensystems der jeweilige Einsatzzweck variabel vorgeben, d.h. es ist problemfrei möglich, zwei Kabelschalter und einen Trafoschalter, drei Kabelschalter und einen Trafoschalter oder zwei Kabelschalter und zwei Trafoschalter innerhalb des Gehäuses 1 zu realisieren.

Die jedem Einzelschalter zugeordneten Festkontakte 6 sind in Form von Durchführungen aus dem Gehäuse 1 geführt und können außerhalb des Gehäuses mit Kabeln oder Sicherungen verbunden werden.

Im Bereich der Verbindungsebene 11 sind an den jeweiligen Gehäusehälften 2, 3 Erderkontakte 7 befestigt und mit einer Schiene 8 verbunden, die aus dem Gehäuse 1 herausgeführt ist, so daß die Erdverbindung von außen erfolgen kann.

Die Erderkontakte sind dabei so gestaltet, daß ihre Kontaktbereiche 9, 10 symmetrisch zur Verbindungsebene 11 gelegen sind, obwohl jeder Erderkontakt einer Gehäusehälfte 2 bzw. 3 zugeordnet bzw. an dieser befestigt ist.

Durch die symmetrische Anordnung der Kontaktbereiche 9, 10 der Erderkontakte 7 ergibt sich innerhalb eines jeden Schalters eine Dreieckanordnung der feststehenden Kontakte und damit auch eine sehr raumsparende Gestaltung, wobei aufgrund der Tatsache, daß alle Schalterräume miteinander in Verbindung stehen, stets das Gasvolumen von vier Schaltern zur Verfügung steht.

Jede Gehäusehälfte 2, 3 besitzt zwei zur Halterung des Mittelkontakts 4 dienende Teilzylinderschalen 5, die jeweils konzentrisch zu den Drehachsen 12 der jeweils zugehörigen Schaltmesser 13 verlaufen und sich über einen Bogenbereich von 90° erstrecken. An ihren aneinandergrenzenden Enden sind diese beiden Schalen miteinander verbunden bzw. einteilig ausgebildet.
Die voneinander beabstandeten Enden der beiden Teilzylinderschalen einer jeden Gehäusehälfte liegen an den entsprechenden Enden der Teilzylinderschalen der anderen Gehäusehälfte bündig an, und zwischen den zu den beiden Gehäusehälften gehörenden Schalen sind vorzugsweise noch im montierten Zustand des Gehäuses aneinanderstoßende Stützelemente 14 in Stegform vorgesehen.

Die Mittelkontakte 4 besitzen jeweils die Form eines Rechtecks mit in den Ecken sich nach außen erweiternden Kontaktbereichen zur Zusammenwirkung mit den verschiedenen Schaltmessern 13. Die bisher bei bekannten Schaltern dieser Art erforderliche Sammelschiene ist somit praktisch zu einem derartigen Mittelkontakt 4 verkleinert.

Bei den Antrieben für die Drei-Wege-Schalter muß jeweils der unterschiedliche Drehsinn berücksichtigt werden, d.h., daß an zwei Antrieben der Drehsinn umgekehrt werden muß, wie dies auch durch Pfeile angedeutet ist.

Zwischen den einzelnen Polen können an die Gehäusehälften Trennwandelemente angeformt werden, und es ist auch möglich, die Gießformen so auszulegen, daß durch angeformte Köcher sowie Steckverbindungen eine überflutbare Anlage erhalten wird.

Jedem Schalterfeld ist ferner eine schwenkbar gelagerte Klappe zugeordnet, die bei jedem Einschaltvorgang zum Zwecke der Vermeidung einer Schaltmesser-Abbremsung durch Verschwenken ausweicht, während sie beim Ausschalten an einem Anschlag zur Anlage kommt und damit im Zusammenwirken mit dem entsprechend ausgebildeten Träger des beweglichen Kontaktes ein Beblasen des Lichtbogens ermöglicht.

## Patentansprüche

1. Mehrfeldriger Mittelspannungs-Drehschalter in SF6-Ausführung, bei dem die den einzelnen Feldern zugeordneten, drehbaren Schaltmesser (13) und die zugehörigen Festkontakte (6) in einem dichten Gehäuse (1) gelagert bzw. gehaltert sind,
dadurch **gekennzeichnet**,
daß das Gehäuse (1) als zweiteiliges Kunststoffgehäuse, insbesondere Gießharzgehäuse (2, 3) ausgebildet und im Mittelbereich mit einer schalenartigen, aus zwei symmetrischen Hälften bestehenden Kunststoffhalterung (5) für Sammelschienenfunktion besitzende Mittelkontakte (4) versehen ist.

2. Drehschalter nach Anspruch 1,
dadurch **gekennzeichnet**,
daß die Festkontakte (6) als Gehäusedurchführungen ausgebildet sind und Anschlüsse für Kabel oder Sicherungen bilden.

3. Drehschalter nach Anspruch 1 oder 2,
dadurch **gekennzeichnet**,
daß im Bereich der Verbindungsebene (11) der beiden Gehäusehälften (2, 3) in der Gehäusewandung Erderkontakte (7) befestigt und mit einer aus dem Gehäuse (1) geführten Anschlußschiene (8) verbunden sind.

4. Drehschalter nach einem der vorhergehenden Ansprüche,
dadurch **gekennzeichnet**,
daß die beiden Gehäusehälften (2, 3) symmetrisch ausgebildet sind.

5. Drehschalter nach Anspruch 3 und 4,
dadurch **gekennzeichnet**,
daß die Erderkontakte (7) einander diametral gegenüberliegend in der einen bzw. der anderen Gehäusehälfte (2 bzw. 3) gehaltert sind und ihre Kontaktbereiche (9, 10) bezüglich der Verbindungsebene (11) symmetrisch gelegen sind.

6. Drehschalter nach einem der vorhergehenden Ansprüche,
dadurch **gekennzeichnet**,
daß die Festkontakte (6) an den Eckpunkten eines senkrecht zu der Verbindungsebene (11) verlaufend gedachten Rechtecks angeordnet sind.

7. Drehschalter nach einem der vorhergehenden Ansprüche,
dadurch **gekennzeichnet**,
daß die Drehachsen (12) der Schaltmesser (13) jeweils etwa in halber Höhe der Gehäusehälften (2, 3) gelegen und die Schaltmesser (13) zur Drehachse (12) versetzt angeordnet sind.

8. Drehschalter nach einem der vorhergehenden Ansprüche,
dadurch **gekennzeichnet,**
daß die Mittelkontakte (4) die Form eines Rechtecks mit in den Ecken nach außen erweiternden Kontaktbereichen besitzen.

9. Drehschalter nach Anspruch 8,
dadurch **gekennzeichnet**,
daß im wesentlichen nur die Kontaktbereiche über die schalenartige Kunststoffhalterung vorstehen.

10. Drehschalter nach einem der vorhergehenden Ansprüche,
dadurch **gekennzeichnet**,
daß jede Gehäusehälfte (2, 3) zwei zur Mittelkontakthalterung dienende Teilzylinderschalen aufweist, die jeweils konzentrisch zu der einen und der anderen der beiden je Gehäusehälfte (2, 3) vorgesehenen Schaltmesser-Drehachsen (12) verlaufen und an ihren beiden aneinandergrenzenden Enden miteinander verbunden sind.

11. Drehschalter nach Anspruch 10,
dadurch **gekennzeichnet**,
daß die voneinander beabstandeten Enden der beiden sich jeweils über einen Winkelbereich von etwa 90° erstreckenden Teilzylinderschalen einer Gehäusehälfte (2) an den entsprechenden Enden der Teilzylinderschalen der anderen Gehäusehälfte (3) bündig anliegen.

12. Drehschalter nach Anspruch 11,
dadurch **gekennzeichnet**,
daß an die Teilzylinderschalen der Halterung (5) sich bis zur Verbindungsebene (11) erstreckende Stützelemente (14) angeformt sind, die jeweils mit entsprechenden Stützelementen der anderen Gehäusehälfte zusammenwirken.

13. Drehschalter nach einem der vorhergehenden Ansprüche,
dadurch **gekennzeichnet**,
daß Aufnahmekammern für Sicherungen unmittelbar an das Gehäuse (1) angeformt sind.

## Claims

1. Multiple section medium voltage rotary switch in SF6 form in which the rotatable switching blades (13) associated with the individual fields and the associated fixed contacts (6) are mounted in a sealed housing (1),
characterised in that
the housing (1) is formed as a two-part plastic housing, in particular a cast resin housing (2, 3), and is provided in a central region with a shell-like plastic holder (5) consisting of two symmetrical halves for central contacts (4) having a busbar function.

2. Rotary switch in accordance with claim 1,
characterised in that
the fixed contacts (6) are formed as housing lead-throughs and form terminals for cables or fuses.

3. Rotary switch in accordance with claim 1 or claim 2,
characterised in that
earthing contacts (7) are secured in the region of the joint plane (11) of the two housing halves (2, 3) in the housing wall and are connected to a connection rail (8) which is led out of the housing (1).

4. Rotary switch in accordance with one of the preceding claims,
characterised in that
the two housing halves (2, 3) are symmetrically formed.

5. Rotary switch in accordance with claim 3 and claim 4,
characterised in that
the earthing contacts (7) are held diametrically oppositely disposed in the one and/or the other of the housing halves (2 and 3 respectively) and their contact regions (9, 10) are symmetrically disposed relative to the joint plane (11).

6. Rotary switch in accordance with one of the preceding claims,
characterised in that
the fixed contacts (6) are arranged at the corner points of an imaginary rectangle extending perpendicular to the joint plane (11).

7. Rotary switch in accordance with one of the preceding claims,
characterised in that
the rotational axes (12) of the switching blades (13) are respectively disposed at approximately half the height of the housing halves (2, 3), and in that the switching blades (13) are arranged displaced relative to the axis of rotation (12).

8. Rotary switch in accordance with one of the preceding claims,
characterised in that
the central contacts (4) have the form of a rectangle with outwardly broadened contact regions in the corners.

9. Rotary switch in accordance with claim 8,
characterised in that
essentially only the contact regions project beyond the shell-like plastic mount.

10. Rotary switch in accordance with one of the preceding claims,
characterised in that
each housing half (2, 3) has two part-cylindrical shells serving for middle contact mounting which respectively extend concentric to the one and to the other of the two switching blade rotational axes (12) provided for each housing half (2, 3) and are connected together at their two adjoining ends.

11. Rotary switch in accordance with claim 10,
characterised in that
the mutually spaced ends of the two part-cylindrical shells of one housing half (2), which respectively extend over an angular range of approximately 90°, flushly contact the corresponding ends of the part-cylindrical shells of the other housing half (3).

12. Rotary switch in accordance with claim 11,
characterised in that
support elements (14) which extend up to the joint plane (11) are moulded onto the part-cylindrical shells of the holder (5) and respectively cooperate with corresponding support elements of the other housing half.

13. Rotary switch in accordance with one of the preceding claims,
characterised in that
receiving chambers for fuses are directly moulded onto the housing (1).

## Revendications

1. Commutateur rotatif moyenne tension à sections multiples réalisé en SF6, dans lequel les couteaux de commutateurs (13) rotatifs associés aux sections individuelles et les contacts fixes associés (6) sont montés, ou retenus, dans un boîtier étanche (1), caractérisé en ce que le boîtier (1) est réalisé sous la forme d'un boîtier de matière plastique en deux parties, en particulier un boîtier en résine moulée (2, 3), et en ce que ledit boîtier est doté dans la région centrale d'une monture en matière plastique (5) en forme de coquille est constituée de deux moitiés symétriques, pour des contacts centraux (4) qui possèdent la fonction d'un rail collecteur.

2. Commutateur rotatif selon la revendication 1, caractérisé en ce que les contacts fixes (6) sont réalisés sous la forme de traversées du boîtier et constituent des bornes de raccordement pour des câbles ou des fusibles.

3. Commutateur rotatif selon l'une ou l'autre des revendications 1 et 2, caractérisé en ce que des contacts de mise à la terre (7) sont fixés dans la paroi du boîtier dans la région du plan de raccordement (11) des deux moitiés de boîtier (2, 3), et en ce que lesdits contacts de mise à la terre sont reliés à un rail de raccordement (8) qui mène hors du boîtier (1).

4. Commutateur rotatif selon l'une quelconque des revendications précédentes, caractérisé en ce que les deux moitiés de boîtier (2, 3) sont réalisées de façon symétrique.

5. Commutateur rotatif selon l'une ou l'autre des revendications 3 et 4, caractérisé en ce que les contacts de mise à la terre (7) sont retenus dans l'une ou l'autre des moitiés de boîtier (2, 3 respectivement) en opposition diamétrale l'un par rapport à l'autre, et en ce que leurs zones de contact (9, 10) sont disposées symétriquement par rapport au plan de raccordement (11).

6. Commutateur rotatif selon l'une quelconque des revendications précédentes, caractérisé en ce que les contacts fixes (6) sont agencés aux sommets d'un rectangle imaginaire qui est disposé perpendiculairement au plan de raccordement (11).

7. Commutateur rotatif selon l'une quelconque des revendications précédentes, caractérisé en ce que les axes de rotation (12) des couteaux de commutateur (13) sont disposés chacun à peu près à la moitié de la hauteur des moitiés de boîtier (2, 3), et en ce que les couteaux de commutateur (13) sont agencés de façon décalée par rapport à l'axe de rotation (12).

8. Commutateur rotatif selon l'une quelconque des revendications précédentes, caractérisé en ce que les contacts centraux (4) possèdent la forme d'un rectangle comportant dans les coins des zones de contact qui s'élargissent vers l'extérieur.

9. Commutateur rotatif selon la revendication 8, caractérisé en ce que sensiblement seules les régions de contact dépassent au-delà de la monture en matière plastique en forme de coquille.

10. Commutateur rotatif selon l'une quelconque des revendications précédentes, caractérisé en ce que chaque moitié de boîtier (2, 3) comporte deux coques semi-cylindriques qui servent de monture pour le contact central, chacune desdites coques semi-cylindriques s'étendant respectivement concentriquement à l'un ou à l'autre des axes de rotation (12) prévus pour les couteaux de commutateur dans chaque moitié de boîtier (2, 3), et en ce que lesdites coques semi-cylindriques sont reliées l'une à l'autre à leurs deux extrémités en juxtaposition.

11. Commutateur rotatif selon la revendication 10, caractérisé en ce que les extrémités distantes l'une de l'autre des deux coques semi-cylindriques, qui s'étendent chacune sur une zone angulaire d'environ 90°, d'une moitié de boîtier (2) sont en contact en affleurement contre les extrémités correspondantes des coques semi-cylindriques de l'autre moitié de boîtier (3).

12. Commutateur rotatif selon la revendication 11, caractérisé en ce que des éléments de support (14) qui s'étendent jusqu'au plan de raccordement (11) sont formés sur les coques semi-cylindriques de la monture (5), lesdits éléments de support coopérant respectivement avec des éléments de support correspondants de l'autre moitié de boîtier.

13. Commutateur rotatif selon l'une quelconque des revendications précédentes, caractérisé en ce que des cavités de réception pour des fusibles sont formées directement dans le boîtier (1).
